**Europäisches Patentamt**

**European Patent Office**

**Office européen des brevets**

(11) Numéro de publication : **0 446 111 B1**

(12) **FASCICULE DE BREVET EUROPEEN**

(45) Date de publication du fascicule du brevet :
**15.02.95 Bulletin 95/07**

(21) Numéro de dépôt : **91400571.5**

(22) Date de dépôt : **01.03.91**

(51) Int. Cl.⁶ : **G01S 5/18,** G01S 5/00,
G01S 5/30, A01K 73/02

(54) **Procédé et dispositif de positionnement acoustique pour objet sous-marin et application à un chalut.**

(30) Priorité : **06.03.90 FR 9002809**

(43) Date de publication de la demande :
**11.09.91 Bulletin 91/37**

(45) Mention de la délivrance du brevet :
**15.02.95 Bulletin 95/07**

(84) Etats contractants désignés :
**ES GB IT**

(56) Documents cités :
**WO-A-89/12835**
**FR-A- 2 102 493**
**US-A- 4 131 873**
**PATENT ABSTRACTS OF JAPAN, vol. 10, no. 111 (P-451)[2168], 25 avril 1986; & JP-A-60 243 580 (OKI DENKI) 03-12-1985**
**OCEAN INDUSTRY, no. 22, janvier 1987, pages 17-22, US; M.H. HOUSTON: "Improving the accuracy of marine 3-D seismic surveys"**

(73) Titulaire : **THOMSON-CSF**
**173, Boulevard Haussmann**
**F-75008 Paris (FR)**

(72) Inventeur : **de Solminihac, François**
**THOMSON-CSF,**
**SCPI,**
**Cédex 67**
**F-92045 Paris La Défense (FR)**

(74) Mandataire : **Desperrier, Jean-Louis et al**
**THOMSON-CSF**
**SCPI**
**B.P. 329**
**50, rue Jean-Pierre Timbaud**
**F-92402 Courbevoie Cédex (FR)**

## Description

La présente invention se rapporte à un dispositif de positionnement acoustique d'un chalut par rapport à un chalutier et par rapport au fond.

La connaissance précise de la position d'un objet sous-marin est particulièrement importante. Notamment lorsqu'il s'agit d'un objet tracté par un bateau, cette connaissance permet un meilleur guidage de l'objet et une meilleure navigation de l'ensemble bateau-objet pour diminuer les risques de pertes de l'objet, ce qui est souvent coûteux, et pour augmenter la sécurité de l'équipage en évitant les roches réputées dangereuses. Par ailleurs, dans le cas d'un chalutier tractant un chalut, le guidage du chalut sur des fonds poissonneux connus et souvent situés près des zones rocheuses, doit être effectué avec précision pour obtenir des prises plus intéressantes et pour régler exactement la symétrie du train de pêche (ouverture horizontale) afin de rentabiliser au maximum les prises, étant donné qu'un faible décalage des funes (câbles de remorquage du chalut) diminue beaucoup le taux de remplissage du chalut.

Actuellement, il existe différents systèmes pour contrôler la position d'un objet sous-marin, mais ces systèmes manquent de précision la position de l'objet par rapport à un bateau de surface et par rapport au fond n'est déterminée qu'approximativement et lorsqu'il s'agit d'un objet tracté, ces systèmes nécessitent de faire préalablement des points de repère sur les câbles de remorquage de l'objet, ce qui occupe l'équipage entier pendant au moins deux journées complètes et représente un manque à gagner important.

On connaît du brevet français 2 102 493 (Nauchno-Issledovatelsky institut "Gidropribor") un système de transmission des paramètres d'un chalut. Ce système ne s'intéresse qu'à la localisation du chalut dans le sens vertical, notamment quant à sa profondeur d'immersion et à son ouverture verticale. Il n'est aucunement question de son écart par rapport à la ligne de route du bateau ni de son ouverture horizontale et en conséquence de la localisation des pointes d'ailes.

Ce document montre que le problème considéré comme important jusqu'à présent à résoudre était celui de localiser le chalut en position et en ouverture verticale et de transmettre un certain nombre d'autres paramètres tels que la température et le degré de remplissage du chalut, alors que le problème de l'écart par rapport à la ligne de route du bateau de l'ouverture horizontale du chalut et de la localisation des pointes d'ailes était ignoré.

Pour résoudre ces problèmes, l'invention propose un dispositif selon la revendication 1.

D'autres particularités et avantages de l'invention apparaîtront clairement dans la description suivante donnée à titre d'exemple non limitatif et faite en regard des figures annexées qui représentent :
- les figures 1a et 1b, un chalutier remorquant un chalut et équipé d'un système de positionnement, selon l'invention, respectivement en coupe verticale et en vue de dessus ;
- la figure 2, un exemple de visualisation des informations ;
- la figure 3, un synoptique du dispositif d'émission, selon l'invention ;
- la figure 4, le chronogramme des signaux émission et réception entre une balise acoustique et les hydrophones pour un cycle de mesures correspondant à une récurrence, selon l'invention ;
- la figure 5, un schéma synoptique du dispositif de réception, selon l'invention ;
- la figure 6, un schéma illustrant les positions relatives des balises acoustiques et des hydrophones, selon l'invention.

La connaissance précise de la position d'un chalut par rapport à un chalutier et par rapport au fond étant un problème particulièrement important, la suite de la description sera faite en référence à cet exemple particulier. Mais il est bien entendu que l'invention peut être utilisée pour d'autres applications sous-marines.

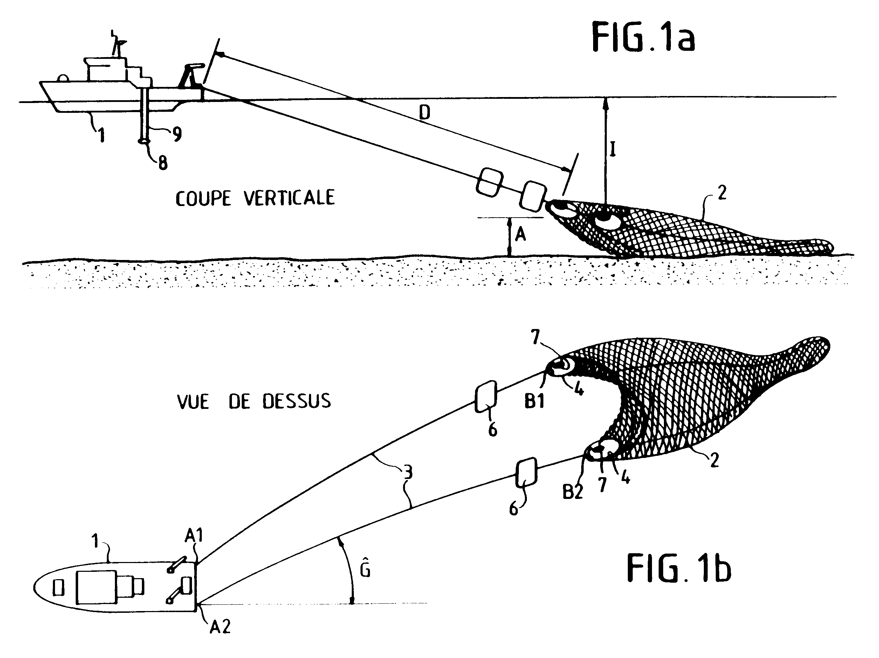

Les figures 1a et 1b, représentent respectivement une coupe verticale et une vue de dessus d'un chalutier remorquant un chalut et équipé d'un système de positionnement du chalut, selon l'invention. Le chalutier 1, tracte le chalut 2, par l'intermédiaire de deux cables, dits funes, 3, fixés par l'une de leurs extrémités A1, A2, au chalutier et par l'autre extrémité B1, B2, aux pointes d'ailes 4 du chalut. L'ensemble constitué par le chalut 2 et les funes 3 est appelé train de pêche.

Sur chaque fune est disposé un panneau 6, par exemple en bois ou en plastique, jouant le rôle d'aileron de dérive et destiné à écarter les deux funes, 3, pour que le chalut, 2, s'ouvre.

Deux balises acoustiques, 7, d'émission d'ondes acoustiques sont fixées sur les points dont on veut connaître précisément la position, par exemple, en avant des pointes d'ailes, 4, du chalut, 2. Ces balises, 7, se présentent comme des boîtiers de dimensions réduites supportant des chocs répétés et des passages de poulies, ces poulies étant fixées à l'arrière du chalutier, 1, et servant au guidage des funes lors du largage du train de pêche à la mer ou lors de la remontée du train de pêche à bord du chalutier. La flottabilité des balises acoustiques est négative pour que la balise prenne une bonne position à la mise à l'eau du chalut.

Deux hydrophones 8 de réception d'ondes acoustiques, sont montés sur une perche 9 solidaire du chalutier 1, cette perche étant disposée soit sur le côté du chalutier soit dans un puits de coque. Les deux hydrophones sont placés horizontalement pour former un goniomètre. Ils reçoivent les signaux acoustiques en provenance des balises acoustiques et les transforment en signaux électriques qui sont retransmis par câbles jusqu'à un coffret électronique situé à bord du chalutier. Ces hydrophones permettent de mesurer le gisement des balises acoustiques, angle G, jusqu'à 45° d'écartement des balises par rapport à l'axe de route du chalutier la précision de la mesure est de l'ordre du degré. Le coffret électronique, de faibles dimensions, calcule la distance oblique D séparant les balises 7 du chalutier 1, ainsi que les informations gisement, immersion et altitude des balises acoustiques ; le gisement est déterminé par l'angle G entre l'axe de route du chalutier 1 et la projection, dans le plan horizontal, de la direction du train de pêche, l'immersion I est la distance entre les balises acoustiques 7 et la surface de la mer, l'altitude A et la distance entre les balises acoustiques 7 et le fond de la mer. Pour effectuer ces mesures et ces calculs, chaque balise acoustique est équipée d'une horloge synchronisée sur une horloge maître située dans le coffret électronique.

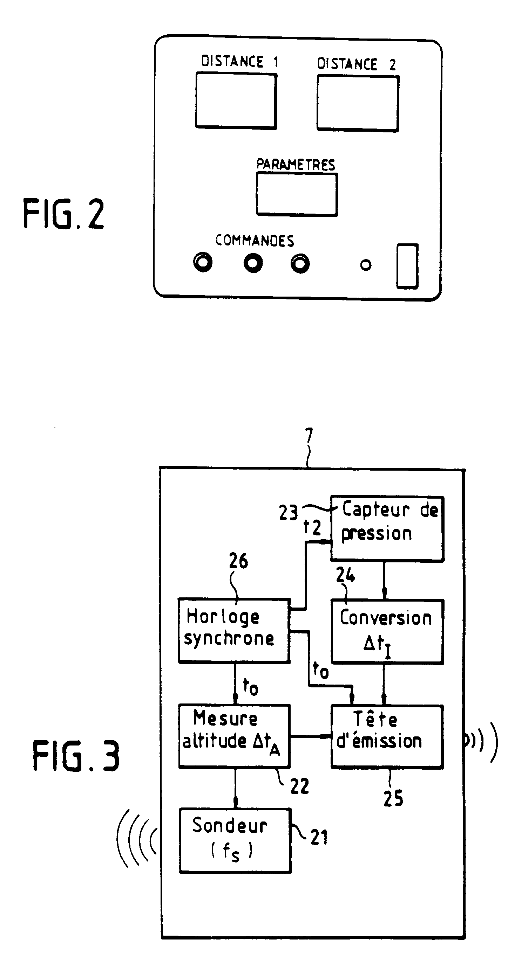

La figure 2 montre un exemple de visualisation des informations. La visualisation des informations peut se faire au niveau du coffret électronique. Sur cette figure, deux encadrés C1, C2, indiquent en permanence les distances des balises acoustiques au chalutier. Une commande spécifique donne dans un troisième encadré, C3, les informations gisement, profondeur d'immersion, et altitude par rapport au fond des deux balises acoustiques.

La figure 3 représente un synoptique du dispositif d'émission, selon l'invention.

A l'émission, les balises acoustiques 7 comportent, chacune, un sondeur 21 relié, par une liaison bidirectionnelle, à un dispositif de mesure d'altitude Δ tA, 22, un capteur de pression 23, relié à un dispositif de conversion Δ tl, 24, pour calculer respectivement leur altitude par rapport au fond et leur profondeur d'immersion, et une tête d'émission 25 pour envoyer les informations d'altitude et d'immersion sous forme de signaux acoustiques vers les hydrophones 8. Le sondeur 21 et le capteur de pression 23 sont choisis en fonction des caractéristiques souhaitées qui seront par exemple, pour le sondeur 21, une altitude maximum égale à 50m, une précision égale ± 0,5m et une résolution de ± 0,1m ; pour le capteur de pression, une immersion maximale égale à 500m, une précision égale à ± 1,5m. Pour la tête d'émission, la portée devra par exemple atteindre 1500m.

La balise acoustique peut comporter d'autres capteurs tels que par exemple, un capteur de température, un capteur de tension, un capteur d'ouverture, un capteur de remplissage du chalut.

Chaque balise acoustique est équipée d'une horloge 26, synchrone d'une horloge maître située dans le coffret électronique, qui détermine la cadence de mesure et de transmission des signaux acoustiques. Les horloges de chaque balise sont décalées l'une par rapport à l'autre, de façon à pouvoir les distinguer.

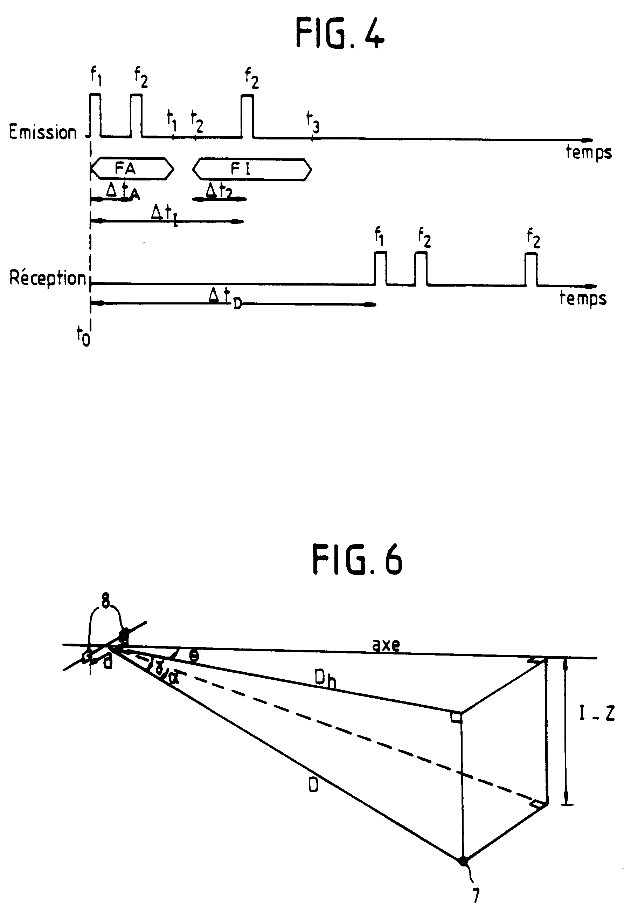

La figure 4 représente le chronogramme des signaux émission et réception entre une balise acoustique et les hydrophones pour un cycle de mesures correspondant à une récurrence.

Pour transmettre, sous forme de signaux acoustiques, les différents paramètres mesurés par les capteurs de la balise acoustique, vers les hydrophones de réception, il faut coder ces paramètres. Le code choisi est un code temporel tel qu'à une valeur de chaque paramètre mesuré correspond un intervalle de temps. Pour transmettre un tel code, un moyen utilisé consiste à émettre des impulsions acoustiques, en nombre suffisant pour transmettre tous les paramètres mesurés par les capteurs, les intervalles de temps séparant ces impulsions étant caractéristiques des paramètres mesurés. Le chronogramme de la figure 4 concerne uniquement l'émission et la réception des signaux nécessaires pour calculer la position du chalut par rapport au chalutier, et les paramètres mesurés sont l'altitude A et l'immersion I de la balise acoustique. Mais d'autres paramètres peuvent être codés et transmis de la même façon tel que, par exemple, des mesures de température, de tension, et des mesures d'ouverture du chalut ou de taux de capture.

A chaque récurrence, la tête d'émission de chaque balise acoustique émet, à des dates différentes, trois impulsions vers les hydrophones : une impulsion de distance à la date t0 et de fréquence f1 (par exemple f1 = 18kHz) ; une impulsion d'altitude à la date t0+ ΔtA et de fréquence f2 (par exemple f2 = 20 kHz) ; une impulsion d'immersion à la date t0+ Δtl et de fréquence f2.

L'intervalle de temps ΔtA est une mesure de l'altitude de la balise acoustique 7. Cette mesure est effectuée de manière classique par le sondeur 21 : le sondeur 21 émet un signal de fréquence fs (fs est très différente de f1 et f2, par exemple fs égale 300 kHz) vers le fond sous-marin à la date t0 et reçoit l'écho de ce même signal fs au bout d'un intervalle de temps ΔtA qui dépend de la distance du sondeur au fond sous-marin. Cet intervalle de temps ΔtA, mesuré par le dispositif de mesure d'altitude Δ tA, 24, est compris dans une fenêtre temporelle FA, entre les instants t0 et t1, tel que l'instant t1 correspond à la distance maximale mesurable par le sondeur.

La mesure de la profondeur d'immersion de la balise acoustique est effectuée par le capteur de pression 23 à une date t2 telle que t2>t1. Cette mesure est ensuite convertie en intervalle de temps Δt2 par le dispositif de conversion 24. L'intervalle de temps Δt2 est donc une mesure de la profondeur d'immersion de la balise acoustique 7 qui est obtenue à partir de l'intervalle de temps Δt1 en lui retranchant (t2-t0). L'intervalle de temps Δ t2 est compris dans une fenêtre temporelle FI, entre les instants t2 et t3, tel que l'instant t3 correspond à la profondeur d'immersion maximale mesurable par le capteur de pression 23.

La discrimination entre les impulsions de distance et d'altitude est faite par la fréquence. La discrimination entre les impulsions d'altitude et d'immersion est une discrimination temporelle obtenue en choisissant t2>t1.

Les impulsions émises par l'une des balises acoustiques 7 sont reçues par les deux hydrophones 8 au bout d'un intervalle de temps $\Delta tD$. Cet intervalle de temps est une mesure de la distance oblique D entre cette balise acoustique 7 et les hydrophones 8.

Un cycle de mesures correspond à l'émission, à la réception et au traitement des signaux correspondant à une seule balise acoustique. La deuxième balise acoustique émet des signaux lorsque le premier cycle de mesures est terminé. Une récurrence comporte deux cycles de mesures correspondant respectivement aux deux balises acoustiques.

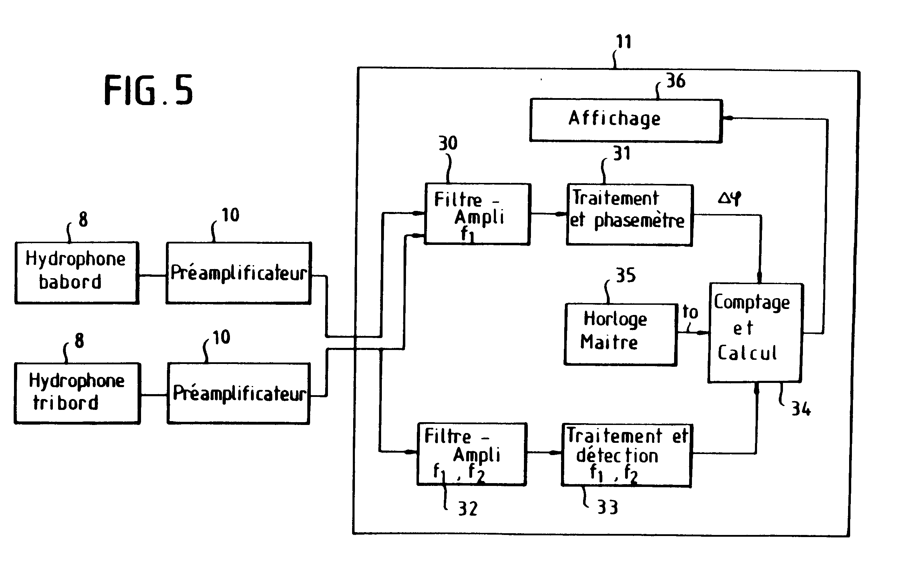

La figure 5 représente un synoptique du dispositif de réception, selon l'invention. Les deux hydrophones 8 reçoivent les signaux acoustiques émis par une balise acoustique 7 et les convertissent en signaux électriques. Ces signaux électriques sont préamplifiés dans des préamplificateurs, 10, et transmis par l'intermédiaire d'un câble jusqu'à un coffret électronique, 11. Dans le coffret électronique, 11, le traitement des signaux est effectué suivant deux canaux :

- dans un premier canal, les impulsions de distance à la fréquence f1 reçues par chacun des hydrophones, sont sélectionnées par filtrage et amplifiées dans un dispositif filtre et amplificateur 30, puis envoyées dans un dispositif traitement et phasemètre 31 qui effectue un traitement spécifique et qui mesure la différence de phase $\Delta \varphi$ entre les deux impulsions f1 provenant de la même balise. Cette différence de phase est transmise à un dispositif de comptage et de calcul, 34 qui en déduit la valeur de l'angle de dépointage, $\alpha$, de la balise acoustique dans le plan hydrophone-balise acoustique.

- Dans un deuxième canal, les trois impulsions distance, altitude et immersion reçues d'une balise acoustique par un seul hydrophone, tribord par exemple, sont filtrées et amplifiées dans un dispositif filtre et amplificateur 32, puis traitées et détectées dans un dispositif de traitement et détection 33, et transmises au dispositif de comptage et de calcul 34.

Les opérations effectuées dans le dispositif de comptage et de calcul 34 sont commandées par une horloge maître 35. Dans ce dispositif 34 sont déterminés les intervalles de temps $\Delta tD$, $\Delta tA$, et $\Delta tI$ correspondant respectivement à la distance, à l'altitude et à l'immersion de la balise acoustique. Ces intervalles de temps sont obtenus en comptant le temps écoulé entre la date t0 à laquelle ont été émises les impulsions par la balise acoustique et les dates correspondant aux fronts de montée des impulsions reçues. La distance oblique D, et l'altitude A de la balise acoustique sont alors obtenues en multipliant $\Delta tD$ et $\Delta tA$ par la vitesse du son, c. L'immersion de la balise acoustique est obtenue en convertissant $\Delta tI$ en hauteur d'eau. La distance horizontale Dh et l'angle de gisement G de la balise acoustique sont obtenus par des calculs dont les paramètres sont illustrés par la figure 6, qui représente les dispositions relatives d'une balise acoustique par rapport aux hydrophones.

Dans le dispositif, 34, le calcul de l'angle de dépointage, $\alpha$, est obtenu à partir de la mesure de la différence de phase $\Delta \varphi$ entre les deux impulsions de fréquence f1 reçues par chaque hydrophone. Pour deux hydrophones espacés d'une distance d, connue (par exemple comprise entre 5 et 20cm), cette différence de phase est égale à :

$$(1) \qquad \Delta \varphi = \frac{2\pi f1\, d}{c} \sin \alpha ,$$

où c est la vitesse du son.

La distance horizontale Dh et l'angle de gisement G de la balise acoustique sont obtenus à partir des formules suivantes, dans lesquelles Z est l'immersion, connue, des hydrophones (par exemple égale à 1 mètre sous la coque du bateau) :

- Pour la distance horizontale Dh :
     (2)      $\sin S = (I - Z)/D$
     où S est l'angle de site de la balise acoustique déterminé par la formule suivante :
       (3)       $Dh = D \cos S$
- Pour l'angle de gisement G :
     (4)      $\sin G = (D/Dh)\sin \alpha$
     $\alpha$ l'angle de dépointage géographique de la balise acoustique obtenu précédemment à partir de la mesure de la différence de phase $\Delta \varphi$ et à partir de la relation (1).

Les résultats des calculs effectués par le dispositif de comptage et de calcul, 34, sont alors affichés sur un dispositif d'affichage 36.

Différentes variantes peuvent être utilisées pour le traitement des signaux effectués par les dispositifs 31, 35 du coffret électronique, 11. Notamment, des techniques connues de traitement du signal peuvent être utilisées pour améliorer la portée et la précision de mesure angulaire au-delà du degré.

Par exemple, la technique dite de "base ultracourte" associée à un traitement cohérent. Dans cette technique, les impulsions acoustiques émises par les balises acoustiques sont modulées en fréquence. A la réception, les signaux reçus par les hydrophones sont préamplifiés et transmis au coffret électronique où ils sont numérisés et traités dans une chaîne de traitement du signal effectuant des opérations telles que filtrage adapté et compression d'impulsion.

Chacun des signaux ainsi obtenus présente une alternance maximum, et le déphasage $\Delta \varphi$ recherché est obtenu, dans le premier canal de traitement du coffret électronique, 11, en mesurant l'écart de temps entre les sommets de ces alternances. L'angle de dépointage géographique α en est alors déduit à partir de la formule sin α = c Δ φ /2¶ f1 d, selon l'équation (1).

Cette technique de recherche du pic maximum permet aussi d'augmenter la distance d entre les deux hydrophones au-delà de λ/2, ( λ étant la longueur d'onde correspondant à la fréquence f1) en levant l'ambiguïté sur le choix des alternances à comparer.

Une autre technique dite de "base courte" associée à un traitement cohérent, peut être utilisée.

Dans cette technique le traitement des signaux reçus par les hydrophones comporte toutes les étapes précédentes et comporte en plus une démodulation. L'angle de dépointage géographique α est alors obtenu directement par différence de temps Δ t entre les maxima des deux enveloppes des signaux ainsi traités, suivant la relation :

$$(5) \qquad \sin \alpha \; = \; \frac{c.\Delta t}{d}$$

La présente invention n'est pas limitée aux exemples de réalisation précisément décrits, notamment le système de localisation peut être utilisé pour des applications sous-marines variées telles que le positionnement des dragues de mine, le positionnement de systèmes remorqués divers (engins de mesures, sonars, systèmes d'enfouissements), le positionnement entre sous-marins, entre sous-marins et plongeurs, entre plongeurs.

Dans chaque cas, les modules essentiels du système (balises acoustiques, hydrophones, coffret électronique) ne changent pas dans leurs principes. Seuls les moyens de fixations de ces différents sous-ensembles peuvent subir des adaptations spécifiques. Certains paramètres tels que récurrences, portées, échelles de mesures peuvent également être modifiés en fonction de l'application, sans sortir du cadre de l'invention.

De même, dans la description, l'objet sous-marin étant un chalut, l'emploi de deux balises acoustiques est nécessaire. Pour d'autres applications, le nombre de balises acoustiques peut être différent, sans sortir du cadre de l'invention.

Il est également possible d'équiper la balise acoustique d'un nombre de capteurs différents pour émettre un nombre d'informations plus ou moins important à condition d'émettre un nombre d'impulsions correspondant.

Le code utilisé pour transmettre les informations de la balise acoustique vers les hydrophones peut être différent, sans sortir du cadre de l'invention.

## Revendications

1. Système de positionnement acoustique d'un chalut (2) remorqué par un bateau (1) à l'aide de deux funes (3) fixées respectivement aux pointes d'ailes (4) du chalut, ce système étant du type comportant un premier émetteur fixé au chalut pour permettre de transmettre acoustiquement à un récepteur fixé sur le bateau des paramètres caractéristiques du chalut et de son positionnement par rapport au fond et à la surface, caractérisé en ce que ce système comporte un deuxième émetteur, chacun des deux émetteurs (7) étant fixé respectivement à une des pointes d'ailes (4) du chalut pour transmettre chacun au récepteur (8) au moins les mesures de l'altitude et de l'immersion de la pointe d'aile à laquelle il est fixé, et en ce que le récepteur comporte au moins deux hydrophones (8) formant un goniomètre pour déterminer les angles (G) entre l'axe de route du bateau et les projections, dans le plan horizontal, des directions des pointes d'ailes.

## Patentansprüche

1. System zur akustischen Positionsbestimmung eines Schleppnetzes (2), das von einem Schiff (1) mit Hilfe von zwei Leinen (3) geschleppt wird, die an den Flügelspitzen (4) des Schleppnetzes befestigt sind, wobei das System von der Art ist, die einen ersten Sender aufweist, der an dem Schleppnetz befestigt ist, damit er charakteristische Parameter des Schleppnetzes und seiner Position in Bezug auf den Grund und die Oberfläche akustisch zu einem Empfänger übertragen kann, der auf dem Schiff befestigt ist, dadurch gekennzeichnet, daß das System einen zweiten Sender aufweist, wobei jeder der beiden Sender (7) an einer der Flügelspitzen (4) des Schleppnetzes befestigt ist, um zu dem Empfänger (8) wenigstens die Meßwerte der Höhe und der Eintauchtiefe der Flügelspitze zu übertragen, an der er befestigt ist, und daß der Empfänger wenigstens zwei Hydrophone (8) aufweist, die ein Goniometer bilden, um die Winkel (G) zwischen der Kursachse des Schiffs und den Projektionen der Richtungen der Flügelspitzen in der horizontalen Ebene zu bestimmen.

## Claims

1. System for the acoustic positioning of a trawl (2) towed by a boat (1) by means of two warps (3) respectively fixed to the wing points (4) of the trawl, this system being of the type comprising a first transmitter fixed to the trawl in order to make it possible to transmit acoustically to a receiver fixed to the boat characteristic parameters of the trawl and of its positioning with respect to the bed and to the surface, characterized in that this system comprises a second transmitter, each of the two transmitters (7) being respectively fixed to one of the wing points (4) of the trawl in order that each may transmit to the receiver (8) at least the measurements of altitude and immersion of the wing point to which it is fixed, and in that the receiver comprises at least two hydrophones (8) forming a goniometer to determine the angles (G) between the heading direction of the boat and the projections, in the horizontal plane, of the directions of the wing points.

# FIG.1a

COUPE VERTICALE

# FIG.1b

VUE DE DESSUS

EP 0 446 111 B1

FIG.2

DISTANCE 1    DISTANCE 2

PARAMETRES

COMMANDES

FIG.3

7

23 — Capteur de pression
t2

26

Horloge synchrone

24

Conversion $\Delta t_I$

$t_0$

Mesure altitude $\Delta t_A$

$t_0$

Tête d'émission

22

25

Sondeur ($f_S$)    21

# FIG. 4

# FIG. 6

FIG.5